# EUROPÄISCHE PATENTSCHRIFT

(11) **EP 2 439 809 B1**
(45) Veröffentlichungstag und Bekanntmachung des Hinweises auf die Patenterteilung: **03.04.2013**
(21) Anmeldenummer: 11007464.8
(22) Anmeldetag: 14.09.2011
(51) Int. Cl.: H01M 4/32, H01M 4/04

(54) **Verfahren zur Herstellung einer positiven Nickel-Hydroxidelektrode für einen Nickel-Metallhydrid- oder Nickel-Cadmium-Akkumulator**
Method for producing a positive nickel-hydroxide electrode for a nickel-metal hydrid or nickel-cadmium battery
Procédé de fabrication d'une électrode nickel-hydroxyde positive pour un accumulateur hydride métal-nickel ou nickel-cadmium

(30) Priorität: 09.10.2010 DE 102010048009
(43) Veröffentlichungstag der Anmeldung: 11.04.2012
(73) Patentinhaber: Hoppecke Batterie Systeme GmbH, 59929 Brilon (DE)
(72) Erfinder: Schaffrath, Uwe, Dr., 34497 Korbach (DE); Ohms, Detlef, Dr., 37085 Göttigen (DE); Benczur-Ürmössy, Gabor, Dr., 70199 Stuttgart (DE); Markolf, Rainer, 34477 Twistetal (DE); Schmelter, Katja, 59929 Brilon (DE)
(74) Vertreter: Stenger, Watzke & Ring

(56) Entgegenhaltungen:
- EP-A1- 1 176 649
- EP-A2- 1 187 239
- US-A- 5 466 546

## Beschreibung

Die Erfindung betrifft ein Verfahren zur Herstellung einer positiven Nickel-Hydroxidelektrode für alkalische Akkumulatoren, z.B. einen Nickel-Metallhydrid-Akkumulator oder Nickel-Cadmium-Akkumulator. Alkalische Akkumulatoren, z.B. Nickel-Metallhydrid-Akkumulatoren oder Nickel-Cadmium-Akkumulatoren, sind aus dem Stand der Technik an sich bekannt, weshalb es eines gesonderten druckschriftlichen Nachweises an dieser Stelle nicht bedarf.

Nickel-Metallhydrid-Akkumulatoren und Nickel-Cadmium-Akkumulatoren verfügen über eine positive Elektrode aus Nickelhydroxid. Die negative Elektrode ist aus einem Metallhydrid gebildet. Als Elektrolyt kommt eine Lauge, beispielsweise eine Kalilauge zum Einsatz.

Nickel-Metallhydrid-Akkumulatoren haben sich im alltäglichen Praxiseinsatz bewehrt. Sie bieten im Vergleich zu Nickel-Cadmium-Akkumulatoren bei gleicher Spannung in etwa die doppelte Energiedichte. Darüber hinaus sind sie haltbarer als Nickel-Cadmium-Akkumulatoren und kommen vollständig ohne das giftige Schwermetall Cadmium aus.

Die positive Nickel-Hydroxidelektrode eines Nickel-Metallhydrid-Akkumulators verfügt als Trägermaterial über eine Elektrodenträgerstruktur. Diese kann beispielsweise aus einem vernickelten Vliesmaterial gebildet sein. Die Elektrodenträgerstruktur nimmt die Aktivmasse der Elektrode auf. Diese kann beispielsweise in Form einer Paste vorliegen und durch Vibrationsfüllen in die Elektrodenträgerstruktur eingebracht sein. Die Aktivmasse enthält als Hauptbestandteil Nickelhydroxid. Zur Verbesserung insbesondere der Leiteigenschaft können dem Nickelhydroxid Leitzusätze zugegegeben sein, zum Beispiel Graphit, Kohlenstoff und/oder auch Metallpulver.

Der vorbeschriebene Aufbau einer positiven Nickel-Hydroxidelektrode eines Nickel-Metallhydrid-Akkumulators oder Nickel-Cadmium-Akkumulators ist aus dem Stand der Technik an sich bekannt, ebenso wie Verfahren zu deren Herstellung.

Aus der US 6,221,529 B1 ist ferner ein Verfahren bekannt geworden, dem gemäß eine Nickel-Hydroxidelektrode durch Elektrolyse zu einer positiven Nickel-Oxyhydroxidelektrode zum Einsatz in einer Lithiumbatterie umgewandelt wird. Zu diesem Zweck wird die Nickel-Hydroxidelektrode in einem aus einer Salzlösung gebildeten Elektrolyten getränkt.

Die US 2006/0166099 A1 betrifft die Herstellung einer postiven Nickel-Hydroxidelektrode mit Elektrodenträgerstruktur zum Einsatz in einem Nickel-Metallhydrid-Akkumulator. Die endfertig ausgebildeten Nickel-Hydroxidelektroden werden im Rahmen der Endmontage als dann zusammen mit dem Elektrolyten in das Akkumulatorgehäuse eingebracht. Der Elektrolyt kann in Form einer Salzlösung vorliegen.

Sowohl die EP 1187239 A2 als auch die Patentschrift US 5,466,546 offenbaren Verfahren zur Nachbehandlung von Nickelhydroxid -Elektroden durch einfache Tränkung mit wässrigen Salzlösungen.

Obgleich sich aus dem Stand der Technik vorbekannte positive Nickel-Hydroxidelektroden bewährt haben, besteht Verbesserungsbedarf, insbesondere mit Blick auf eine verbesserte Stromausbeute. Es ist deshalb die **Aufgabe** der Erfindung, eine gegenüber dem Stand der Technik verbesserte positive Nickel-Hydroxidelektrode eines Nickel-Metallhydrid-Akkumulators oder Nickel-Cadmium-Akkumulators vorzuschlagen, und zwar insbesondere dahingehend, dass eine verbesserte Stromausbeute erreicht ist.

Zur **Lösung** dieser Aufgabe wird mit der Erfindung vorgeschlagen ein Verfahren zur Herstellung einer positiven Nickel-Hydroxidelektrode für einen alkalischen Nickel-Cadmium- oder Nickel-Metallhydrid-Akkumulator, bei dem eine in einem vorangegangenen Verfahrensschritt hergestellte positive Nickel-Hydroxidelektrode nachbehandelt wird, indem in die von einer Elektrodenträgerstruktur der Elektrode aufgenommene Aktivmasse eine Salzlösung eingebracht wird wobei das Einbringen der Salzlösung unter Vakuum durch Tränkung der Elektrode erfolgt, wobei die Salzlösung von der Aktivmasse aufgesogen wird.

Ausgangspunkt für die erfindungsgemäße Verfahrensdurchführung ist eine nach dem Stand der Technik in an sich bekannter Weise hergestellte positive Nickel-Hydroxidelektrode. Diese wird in erfindungsgemäßer Weise nachbehandelt. Dabei wird im Rahmen dieser Nachbehandlung eine Salzlösung in die Aktivmasse der Elektrode eingebracht. Im Ergebnis dieser Verfahrensdurchführung steht eine positive Nickel-Hydroxidelektrode, in deren Aktivmasse eine Salzlösung eingebracht ist.

Infolge der erfindungsgemäßen Verfahrensdurchführung wird die Elektrode oberflächlich mit einer aktivierenden Substanz in Form einer Salzlösung ausgestattet. Dies hat in vorteilhafter Weise die Ausbildung von halb- und elektrisch leitenden Oberflächenschichten zur Folge, wodurch die Ladungsannahme verbessert wird und unerwünschte Quellungen und/oder Alterungsprozesse unterdruckt werden können. Im Ergebnis kann eine bessere Stromausbeute erreicht werden. Erfindungsgemäß geht es also nicht darum, bei der Herstellung von Aktivmasse Salzlösung einzusetzen. Es geht vielmehr um eine echte Nachbehandlung. "Nachbehandlung" insofern, als dass der Ausgangspunkt für die erfindungsgemäße Verfahrensdurchführung eine nach dem Stand der Technik in an sich bekannter Weise hergestellte positive Nickel-Hydroxidelektrode ist. Im Rahmen der Erfindung geht es nun darum, eine solche in einem vorangeschalteten Verfahrensschritt hergestellte und dem Grunde nach verwendungsfertige positive Nickel-Hydroxidelektrode einer ergänzenden Behandlung zu unterziehen, die dem vorangegangenen Schritt der Herstellung nachgeschaltet ist. Eine dem Grunde nach verwendungsfertige positive Nickel-Hydroxidelektrode wird also im Nachgang behandelt, und zwar in der Weise, dass in die von der Elektrodenträgestruktur der Elektrode aufgenommene Aktivmasse Salzlösung eingebracht wird. Die Aktivmasse der Elektrode wird demnach nachträglich mit einer Salzlösung ausgestattet.

Im Unterschied zum vorgenannten Stand der Technik nach der US 6,221,529 B1 und der US 2006/0166099 A1 geht es bei der erfindungsgemäßen Ausgestaltung auch nicht darum, einen Elektrolyten einzusetzen, der als Salzlösung ausgebildet ist oder als eine Komponente Salzlösung enthält. Die nach der erfindungsgemäßen Verfahrensdurchführung hergestellten Elektroden sind nachbehandelt, und zwar insofern, als dass in die Aktivmasse der Elektroden eine Salzlösung eingebracht ist. Die so ausgebildeten Elektroden werden dann in ein Akkumulatorgehäuse eingesetzt, in welches auch in an sich bekannter Weise Elektrolyt zur endfertigen Ausbildung des Akkumulators einzubringen ist.

Als Salzlösung kommt vorzugsweise eine Metallsalzlösung zum Einsatz. Dabei erfolgt die Auswahl der Salzlösung derart, dass sich die darin enthaltenen Anionen nicht störend auf die spätere Zellreaktion auswirken.

Grundsätzlich dient die erfindungsgemäße Verfahrensdurchführung dazu, in die Aktivmasse der Elektrode durch die eingesetzte Salzlösung nachträglich verschiedene Dotierungen einzubringen, und zwar in die Oberfläche der Elektrode. Hierzu zählen insbesondere Metallionen von den Nebengruppenelementen, wie beispielsweise Zink, Mangan, Eisen, Cobalt, Niobium, Cadmium, Kupfer, Yttrium, Lanthanide oder auch Hauptgruppenelemente, wie beispielsweise Aluminium, Barium und Beryllium.

Das Eindringen der Salzlösung geschieht gemäß der Erfindung unter Vakuumtränkung, wobei die Salzlösung von der Aktivmasse aufgesogen wird. Gemäß dieser Verfahrensdurchführung wird die in einem vorangegangenen Herstellungsprozess hergestellte Elektrode unter Vakuum gesetzt. Es erfolgt infolge dessen ein Einsaugen der Salzlösung in die Aktivmasse, wobei die Salzlösung über entsprechende Ionen verfügt und insofern auch als aktivierende Substanz bezeichnet werden kann. Dabei ist bevorzugt, dass die Oberflächenalkalitat der Elektrode zu einer Ausfällung der gewünschten Stoffe aus der neutralen oder schwach sauren Salzlösung, vorzugsweise Metallsalzlösung erfolgt. Der besondere Vorteil der Anwendung eines Vakuums, das heißt der Vakuumtränkung liegt in einer sehr schnellen und gleichmäßigen Einbringung der Salzlösung in die Elektrode.

Als Druck während der Vakuumtränkung kann ein Druck von 0,001 bar bis 0,2 bar, vorzugsweise von 0,01 bar bis 0,15 bar noch mehr bevorzugt von 0,1 bar eingesetzt werden. Die Verweildauer der Elektrode im Vakuum erfolgt für 10 Sekunden bis 5 Minuten, mehr bevorzugt für 60 Sekunden bis 4 Minuten, noch mehr bevorzugt von 2 Minuten bis 3 Minuten.

Es versteht sich von selbst, dass die angegebenen Parameter zu Druck und Verweildauer in Abhängigkeit sowohl der Zusammensetzung der Aktivmasse als auch der Zusammensetzung der Salzlösung entsprechend auszuwählen sind.

Nach einer Einbringung der Salzlösung in die Aktivmasse wird die Elektrode aus der Aktivierungslösung, das heißt der Salzlösung genommen und anschließend getrocknet. Die Trocknung kann in einem dafür vorgesehenen Umluftofen durchgeführt werden. Gemäß einem weiteren Merkmal der Erfindung kann vorgesehen sein, eine wiederholte Tränkung mit anschließender Trocknung durchzuführen. Dabei können jeweils unterschiedliche Aktivierungslösungen, das heißt Salzlösungen zum Einsatz kommen.

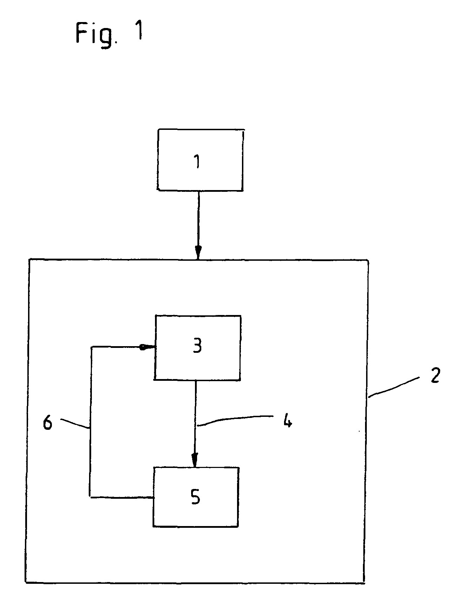

Weitere Merkmale und Vorteile der Erfindung ergeben sich aus der nachfolgenden Beschreibung anhand der einzigen Figur 1, die in schematischer Darstellung die erfindungsgemäße Verfahrensdurchführung zeigt.

Ausgangspunkt für die erfindungsgemäße Verfahrensdurchführung ist gemäß erstem Verfahrensschritt 1 die Herstellung einer positiven Nickel-Hydroxidelektrode gemäß dem Stand der Technik. Diese nach dem Stand der Technik hergestellte Elektrode wird erfindungsgemäß einer Nachbehandlung 2 unterzogen.

Im Rahmen der Nachbehandlung 2 findet zunächst ein Einbringen einer Aktivierungslösung in die Aktivmasse der Elektrode statt. Dabei erfolgt das Einbringen der Aktivierungslösung in die Aktivmasse unter Vakuum durch Vakuumtränkung 3 statt. Zu diesem Zweck wird die Elektrode in ein Vakuum eingebracht. Die Aktivierungslösung wird infolge dessen selbsttätig in die Aktivmasse der Elektrode eingesogen und sie dringt in die Zwischenräume zwischen den Aktivmaterialpartikeln der Aktivmasse sowie in die Poren der Elektrode ein. Die Aktivmasse wird hierdurch mit aktvierenden Substanzen, die der Aktivierungslösung entstammen, ausgestattet.

Als Aktivierungslösung kommt insbesondere eine Salzlösung, vorzugsweise eine Metallsalzlösung in Betracht. In diesem Fall sind es Ionen der Metallsalzlösung, die die aktivierenden Substanzen darstellen.

Im Nachgang an die Vakuumtränkung 3, was in Figur 1 mit dem Pfeil 4 symbolisiert ist, erfolgt eine Trocknung 5 der Elektroden. In Entsprechung des Pfeils 6 können die Vakuumtränkung 3 und die anschließende Trocknung 5 der Elektroden wiederholt durchgeführt werden. Im Falle der Metallsalzlösung als Aktivierungslösung kommen vorzugsweise solche Lösungen mit chemisch am Neutralpunkt fällbaren Metallionen zum Einsatz, die einen pH-Wert zwischen 2 und 9 aufweisen. Als Kationen der Aktivierungslösung finden insbesondere Elemente der Nebengruppe Verwendung, wie zum Beispiel Zink, Mangan, Eisen, Cobalt, Niobium, Cadmium, Kupfer, Yttrium und/oder Lanthanide. Es kommen aber auch Hauptgruppenelemente in Betracht, wie zum Beispiel Aluminium, Barium und Beryllium bzw. auch Mischungen der vorgenannten Ionen.

Bei den Anionen der Aktivierungslösung handelt es sich vorzugsweise um solche, die redoxstabil sind, wie zum Beispiel Borate, Sulfate, Perchlorate, Phosphate, Metaphosphate und/oder Silikate.

### Bezugszeichen

- 1: Herstellung einer positiven Nickel-Hydroxidelektrode gemäß dem Stand der Technik
- 2: Nachbehandlung
- 3: Vakuumtränkung
- 4: Pfeil
- 5: Trocknung
- 6: Pfeil

## Patentansprüche

1. Verfahren zur Herstellung einer positiven Nickel-Hydroxidelektrode für einen Nickel-Cadmium- oder Nickel-Metallhydrid-Akkumulator, bei dem eine in einem vorangegangenen Verfahrensschritt hergestellte positive Nickel-Hydroxidelektrode nachbehandelt wird, indem in die von einer Elektrodenträgerstruktur der Elektrode aufgenommene Aktivmasse eine Salzlösung eingebracht wird, **dadurch gekennzeichnet, dass** das Einbringen der Salzlösung unter Vakuum durch Tränkung der Elektrode erfolgt, wobei die Salzlösung von der Aktivmasse aufgesogen wird.

2. Verfahren nach Anspruch 1, **dadurch gekennzeichnet, dass** eine Trocknung der nachbehandelten Elektrode durchgeführt wird.

3. Verfahren nach einem der vorhergehenden Ansprüche, **dadurch gekennzeichnet, dass** die Vakuumtränkung bei einem Druck von 0,001 bar bis 0,2 bar erfolgt.

4. Verfahren nach einem der vorhergehenden Ansprüche, **dadurch gekennzeichnet, dass** die Vakuumtränkung für einen Zeitraum von 10 Sekunden bis 5 Minuten durchgeführt wird.

5. Verfahren nach einem der vorhergehenden Ansprüche, **dadurch gekennzeichnet, dass** als Salzlösung eine Metallsalzlösung verwendet wird.

6. Verfahren nach einem der vorhergehenden Ansprüche, **dadurch gekennzeichnet, dass** eine wiederholte Vakuumtränkung mit anschließender Trocknung durchgeführt wird.

## Claims

1. A method for producing a positive nickel-hydroxide electrode for a nickel cadmium or nickel metal hydride accumulator, in which a positive nickel-hydroxide electrode which has been produced in a previous process step is subjected to a secondary treatment in which a salt solution is introduced into the active material received by an electrode carrier structure of the electrode, **characterized in that** the introduction of the salt solution is realized under vacuum by imbuing the electrode, wherein the salt solution is absorbed by the active material.

2. A method according to claim 1, **characterized in that** a drying of the electrode which has been subjected to a secondary treatment is realized.

3. A method according to one of the preceding claims, **characterized in that** the vacuum imbuing takes place at a pressure comprised between 0.001 bar and 0.2 bar.

4. A method according to one of the preceding claims, **characterized in that** the vacuum imbuing is carried out in a period of time comprised between 10 seconds and 5 minutes.

5. A method according to one of the preceding claims, **characterized in that** a metal salt solution is used as salt solution.

6. A method according to one of the preceding claims, **characterized in that** a repeated vacuum imbuing with subsequent drying is carried out.

## Revendications

1. Procédé de fabrication d'une électrode d'hydroxyde de nickel positive pour un accumulateur de nickel-cadmium ou au sodium-chlorure de nickel, dans lequel une électrode d'hydroxyde de nickel fabriquée dans une étape de procédé antérieure est traitée postérieurement en introduisant une solution saline dans la matière active reçue par une structure porteuse d'électrode de l'électrode, **caractérisé en ce que** l'introduction de la solution saline se fait sous vide par imbibition de l'électrode, la solution saline étant absorbée par la matière active.

2. Procédé selon la revendication 1, **caractérisé en ce qu'**on réalise un séchage de l'électrode traitée postérieurement.

3. Procédé selon l'une des revendications précédentes, **caractérisé en ce que** l'imbibition sous vide se fait à une pression comprise entre 0,001 bar et 0,2 bar.

4. Procédé selon l'une des revendications précédentes, **caractérisé en ce qu'**on réalise l'imbibition sous vide dans une période comprise entre 10 secondes et 5 minutes.

5. Procédé selon l'une des revendications précédentes, **caractérisé en ce qu'**on utilise une solution de sel métallique en tant que solution saline.

6. Procédé selon l'une des revendications précédentes, **caractérisé en ce qu'**on réalise une imbibition répétée avec un séchage suivant.
